# EUROPEAN PATENT APPLICATION

(11) **EP 4 687 305 A1**
(43) Date of publication of application: **04.02.2026**
(21) Application number: 25190809.1
(22) Date of filing: 21.07.2025
(51) Int. Cl.: H04B 7/06, H04L 5/00

(54) **USER EQUIPMENT-INITIATED BEAM MANAGEMENT**

(30) Priority: 31.07.2024 GB 202411185
(71) Applicant: Nokia Technologies Oy, 02610 Espoo (FI)
(72) Inventor: CAPORAL DEL BARRIO, Samantha, 9000 Aalborg (DK); Baracca, Paolo, 81669 Munich (DE); YUK, Youngsoo, 06275 Seoul (KR)
(74) Representative: Bryers Intellectual Property Ltd

(57) **Abstract**

Example embodiments of the present disclosure are directed to a solution of User Equipment-Initiated Beam Management (UEIBM). A method comprises transmitting, to a second apparatus via an uplink control channel, an indication associated with an uplink resource type to be used by the first apparatus for a beam report in a further uplink channel subsequent to the uplink control channel; and transmitting, to the second apparatus, the beam report by using the further uplink channel with uplink resources of the uplink resource type.

## Description

Various example embodiments of the present disclosure generally relate to the field of telecommunication and in particular, to methods, devices, apparatuses and computer readable storage medium for reporting the number of beams, especially for User Equipment (UE)-Initiated Beam Management (UEIBM).

### BACKGROUND

The UE-initiated Transmission Configuration Indication (TCI)-state/beam reporting feature refers to the case where the UE may be configured with at least one event/condition, and then the UE may start TCI-state beam reporting if this at least one event/condition occurs or is satisfied.

### SUMMARY

In a first aspect of the present disclosure, there is provided a first apparatus. The first apparatus comprises at least one processor; and at least one memory storing instructions that, when executed by the at least one processor, cause the first apparatus at least to: transmit, to a second apparatus via a first target uplink control channel, an indication for notifying a beam report to be transmitted in a second target uplink channel subsequent to the first target uplink control channel; determine, based on a number of beams to be reported, uplink resource type to be used for transmitting the report via the second target uplink channel; and transmit, to the second apparatus, the beam report via the second target uplink channel selected at least based on the determined uplink resource type.

In a second aspect of the present disclosure, there is provided a method. The method comprises: transmitting, to a second apparatus via a first target uplink control channel, an indication for notifying a beam report to be transmitted in a second target uplink channel subsequent to the first target uplink control channel; determining, based on a number of beams to be reported, uplink resource type to be used for transmitting the report via the second target uplink channel; and transmitting, to the second apparatus, the beam report via the second target uplink channel selected at least based on the determined uplink resource type.

In a third aspect of the present disclosure, there is provided a first apparatus. The first apparatus comprises means for transmitting, to a second apparatus via a first target uplink control channel, an indication for notifying a beam report to be transmitted in a second target uplink channel subsequent to the first target uplink control channel; means for determining, based on a number of beams to be reported, uplink resource type to be used for transmitting the report via the second target uplink channel; and means for transmitting, to the second apparatus, the beam report via the second target uplink channel selected at least based on the determined uplink resource type.

In a fourth aspect of the present disclosure, there is provided a computer readable medium. The computer readable medium comprises instructions stored thereon for causing an apparatus to perform at least the method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1A illustrates an example communication environment in which example embodiments of the present disclosure can be implemented;
FIG. 1B illustrates an example diagram of uplink resources in which example embodiments of the present disclosure can be implemented;
FIG. 2 illustrates a schematic diagram of beam management procedures;
FIG. 3A illustrates an example of TCI state configuration;
FIG. 3B illustrates another example of TCI state configuration;
FIG. 4 illustrates a signaling chart for beam management reporting according to some example embodiments of the present disclosure;
FIG. 5A and 5B illustrate example diagrams for beam reporting according to some example embodiments of the present disclosure;
FIG. 6A and 6B illustrate example diagrams for beam reporting according to some example embodiments of the present disclosure;
FIG. 7 illustrates a flowchart of a method implemented at a first apparatus in accordance with some example embodiments of the present disclosure;
FIG. 8 illustrates a flowchart of a method implemented at a second apparatus in accordance with some example embodiments of the present disclosure;
FIG. 9 illustrates a flowchart of a method implemented at a first apparatus in accordance with some example embodiments of the present disclosure;
FIG. 10 illustrates a simplified block diagram of a device that is suitable for implementing example embodiments of the present disclosure; and
FIG. 11 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a transmission reception point (TRP), a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

The term "scheduling request (SR)" used herein may refer to a mechanism by which the UE can request the gNB for uplink resources to transmit data. The term "beam switching" used herein may refer to a procedure where a device is switching from one beam to another, which can also be called intra-cell mobility or beam-level mobility. Beam switching is based on a trigger condition for a beam and the configured beam switching algorithm. The term "information element (IE)" used herein may refer to a fundamental component of many communication protocols, used to convey various types of information.

The term "transmission configuration indication (TCI)" used herein may refer to a parameter used in telecommunications systems to indicate the configuration and characteristics of a transmission link or channel. It provides information about the transmission medium, allowing the receiving equipment to properly interpret and process the transmitted data. One TCI may correspond to one beam. The term "beamforming" used herein may refer to a particular processing technique for signals that allow for directional transmission or reception. Beamforming is a technique to improve the signalto-noise ratio, eliminate undesirable interference sources, and focus transmitted signals to specific locations. The term "beam" used herein may refer to a specific direction in which radio signals are transmitted or received. It is the directional pattern of the radio waves that are focused in a particular direction to maximize the signal strength in that direction while minimizing it in others. A "beam" in the context of telecommunications is the focused and directional propagation of electromagnetic waves, particularly in antenna systems, where the signal is concentrated in a specific angular spread to enhance communication efficiency and coverage in the desired direction. Beams are characterized by their width, shape, and orientation, and are crucial for applications such as satellite communication, radar systems, and wireless transmission, where targeted signal delivery is essential. The terms "beam", "CSI reference signal resource indicator (CRI)", "beam index" and "synchronization signal/physical broadcast channel block resource indicator (SSBRI)" may be used interchangeable hereinafter.

As used herein, the "UE-initiated beam report" refers to a report that is transmitted by the UE when the UE is configured with at least one event/condition, and then this at least one event/condition occurs or is satisfied.

### Example Environment

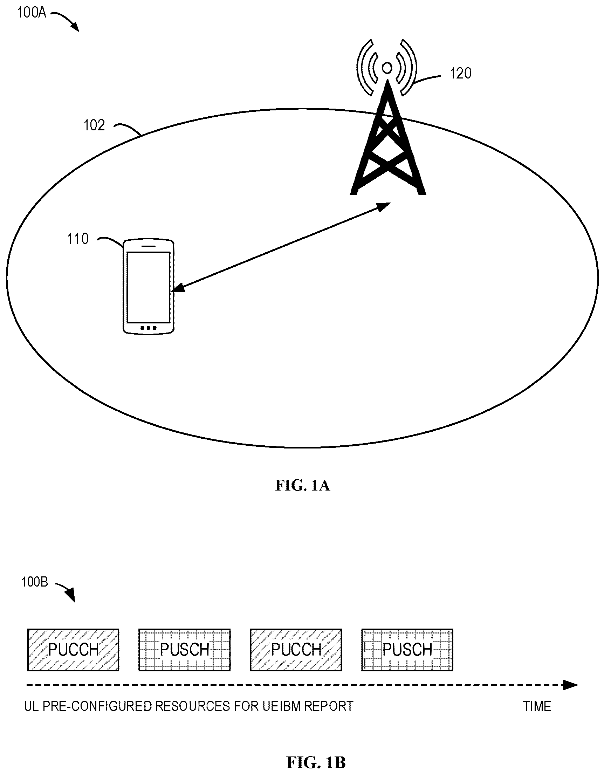

FIG. 1A illustrates an example communication environment 100A in which example embodiments of the present disclosure can be implemented. The communication environment 100 includes a first apparatus 110 and a second apparatus 120. A serving area provided by the second apparatus 120 is called a cell. Further, the second apparatus 120 can provide one or more cells, for example, a cell 102 is provided by the second apparatus 120, as illustrated in FIG. 1A.

In some example embodiments, the first apparatus 110 may be comprised in a terminal device/apparatus and the second apparatus 120 may be comprised in a network device/apparatus serving the terminal device/apparatus.

In the following, for the purpose of illustration, some example embodiments are described with the first apparatus 110 operating as a terminal apparatus and the second apparatus 120 operating as a network apparatus. However, in some example embodiments, operations described in connection with a terminal apparatus may be implemented at a network apparatus or other apparatus, and operations described in connection with a network apparatus may be implemented at a terminal apparatus or other apparatus.

In some example embodiments, if the first apparatus 110 is a terminal apparatus and the second apparatus 120 is a network apparatus, a link from the second apparatus 120 to the first apparatus 110 is referred to as a downlink (DL), while a link from the first apparatus 110 to the second apparatus 120 is referred to as an uplink (UL). In DL, the second apparatus 120 is a transmitting (TX) apparatus (or a transmitter) and the first apparatus 110 is a receiving (RX) apparatus (or a receiver). In UL, the first apparatus 110 is a TX apparatus (or a transmitter) and the second apparatus 120 is a RX apparatus (or a receiver).

In some solutions, two procedures for actually sending back the report have been proposed:
- Mode A, where the second UL channel for the UEIBM report is dynamically scheduled by the gNB; in such procedure the following steps are implemented:
   a. The UE sends in a first PUCCH channel an UL indication to request to the gNB resources in a second UL channel to carry the UEIBM report;
   b. The gNB indicates via DCI to the UE a resource in a second UL channel to carry the UEIBM report;
   c. The UE sends the UEIBM report on the second UL channel.
- Mode B, where the second UL channel for the UEIBM report is pre-configured by the gNB; in such procedure the following steps are implemented:
   a. The UE sends in a first PUCCH channel an UL indication to notify to the gNB that a UEIBM report will be transmitted in a second UL channel;
   b. UE sends the UEIBM report on the second UL channel.

Mode A may be the baseline and is going to be supported by all UEs capable of UEIBM. Mode B may be optional and may be supported only by some UEs.

Currently, it has been discussed how such UL indication in the first PUCCH channel should look like, and two alternatives have been identified:
● One-bit indication, i.e., to simply indicate to the network that an event has been triggered.
● Multi-bit indication where the UE could give some additional information to the network, for example which event has been triggered.

In Mode B, the second UL channel may be pre-configured. The second UL channel may be PUCCH or PUSCH or both.

Reference is now made to FIG. 1B, which illustrates an example diagram of uplink resources in which example embodiments of the present disclosure can be implemented. In the example of FIG. 1B, PUCCH and PUSCH are interlaced. In operation, the UE could be reporting one or more beams in the UEIBM report.

It is to be understood that the number of devices and their connections shown in FIG. 1 are only for the purpose of illustration without suggesting any limitation. The communication environment 100 may include any suitable number of devices configured to implementing example embodiments of the present disclosure. Although not shown, it would be appreciated that one or more additional devices may be located in the cell 102, and one or more additional cells may be deployed in the communication environment 100. It is noted that although illustrated as a network device, the second apparatus 120 may be another device than a network device. Although illustrated as a terminal device, the first apparatus 110 may be another device than a terminal device.

Communications in the communication environment 100A may be implemented according to any proper communication protocol(s), comprising, but not limited to, cellular communication protocols of the first generation (1G), the second generation (2G), the third generation (3G), the fourth generation (4G), the fifth generation (5G), 5.5G, the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

### Work Principle and Example Signaling for Communication

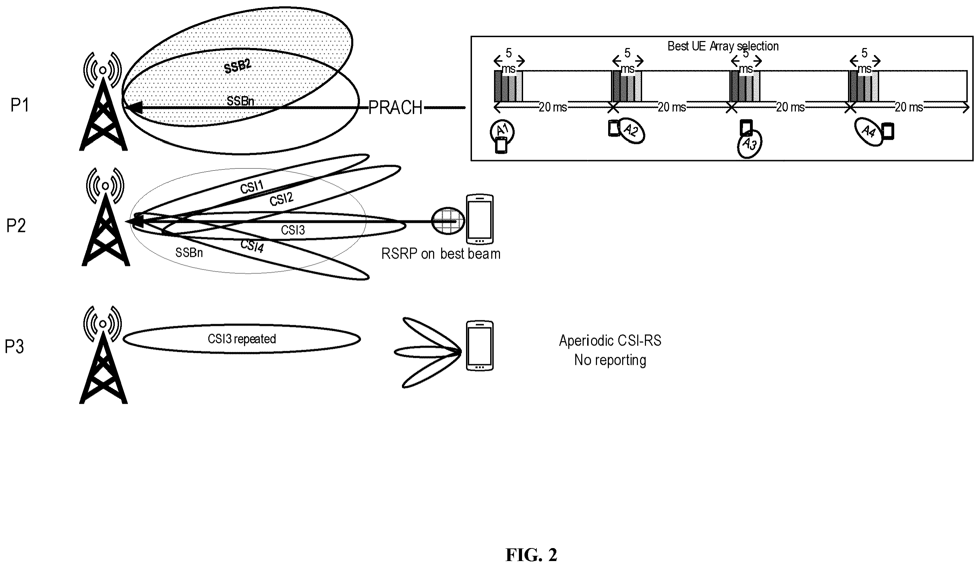

In some solutions, the beam management has been specified in 3 procedures controlled by network: Procedure#1 (P1), Procedure#2 (P2) and Procedure#3 (P3), as illustrated in FIG. 2. The following beam management procedures are supported within one or multiple transmission reception points (TRPs) of the serving cell:
- P1: is used to enable UE measurement on different TRP Tx beams to support selection of TRP Tx beams/UE Rx beam(s).
   - For beamforming at TRP, it typically includes an intra/inter-TRP Tx beam sweep from a set of different beams. For beamforming at UE, it typically includes a UE Rx beam sweep from a set of different beams. UE may scan its antennas/panels sequentially for each SS burst and average over e.g. 3 samples.
- P2: is used to enable UE measurement on different TRP Tx beams to possibly change inter/intra-TRP Tx beam(s).
   - From a possibly smaller set of beams for beam refinements than in P1. Note that P2 can be a special case of P1. P2 may use narrower channel state information (CSI) beams compared to synchronization signal and physical broadcast channel (PBCH) block (SSB) beams.
- P3: is used to enable UE measurement on the same TRP Tx beam to change UE Rx beam in the case UE uses beamforming (e.g. mmW arrays on UEs for FR2 operation). P3 may use aperiodic CSI-RS with 'repetition' flag 'on' which means that the same beam is repeated from network side to enable UE to refine its Rx beam.

In some solutions, periodic, semi-persistent and aperiodic channel state information (CSI) reporting are proposed. For example, CSI resource configuration may specify what type of reference signal (such as, non-zero-power CSI reference signal (RS) synchronization signal block (SSB) (nzp-CSI-RS-SSB), csi-interference measurement (IM)-Resource) is to be transmitted. It also configures the types of the transmission (periodic, aperiodic, semipersistent). The parameter reportConfigType may indicate the scheduling method of the report. It can be periodic, aperiodic and semi-persistent as shown in the table 1 below which is from 3GPP technical specification (TS) 38.214.

**Table 1: Triggering/Activation of CSI Reporting for the possible CSI-RS Configurations.**

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command, as described in clause 6.1.3.16 of [technical specification (TS) 38.321]; for reporting on PUSCH, the UE receives triggering on DCI | Triggered by DCI; additionally, subselection indication as described in clause 6.1.3.13 of [TS 38.321] possible as defined in Clause 5.2.1.5.1. |
| SemiPersistent CSI-RS | Not Supported | For reporting on PUCCH, the UE receives an activation command, as described in clause 6.1.3.16 of [TS 38.321]; for reporting on PUSCH, the UE | Triggered by DCI; additionally, subselection indication as described in clause 6.1.3.13 of [TS 38.321] possible as defined in Clause 5.2.1.5.1. |
| | | receives triggering on DCI | |
| Aperiodic CSI-RS | Not Supported | Not Supported | Triggered by DCI; additionally, subselection indication as described in clause 6.1.3.13 of [TS 38.321] possible as defined in Clause 5.2.1.5.1. |

In some solutions, an "unified" TCI framework is introduced, meaning that transmission configuration indication (TCI) states providing quasi co-location (QCL) assumptions for the reception of DL signals and channels can be used also to provide spatial sources for the transmission of UL signals and channels to determine UL TX spatial filter. Furthermore, the unified TCI framework defines the concept of indicated TCI state. That means that one or multiple (in case of multi-TRP for instance) of the configured TCI states is/are indicated TCI state(s) at a time. The indicated TCI state can be joint DL and UL TCI state or separate DL and separate UL TCI states.

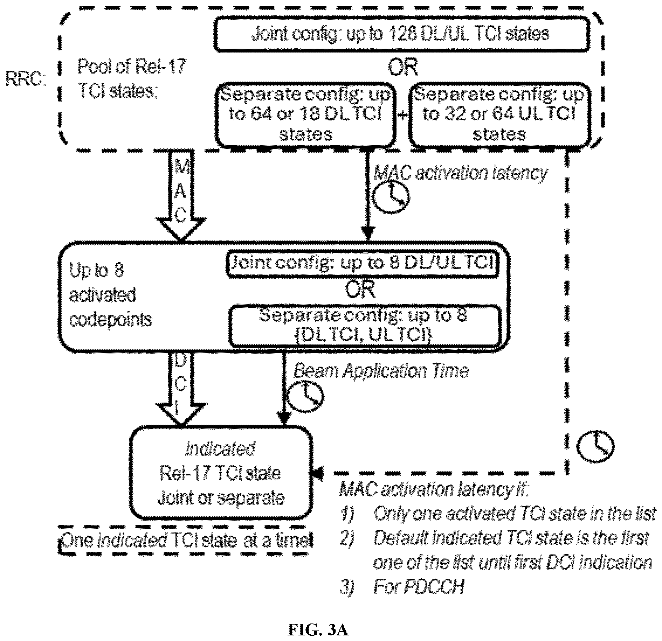

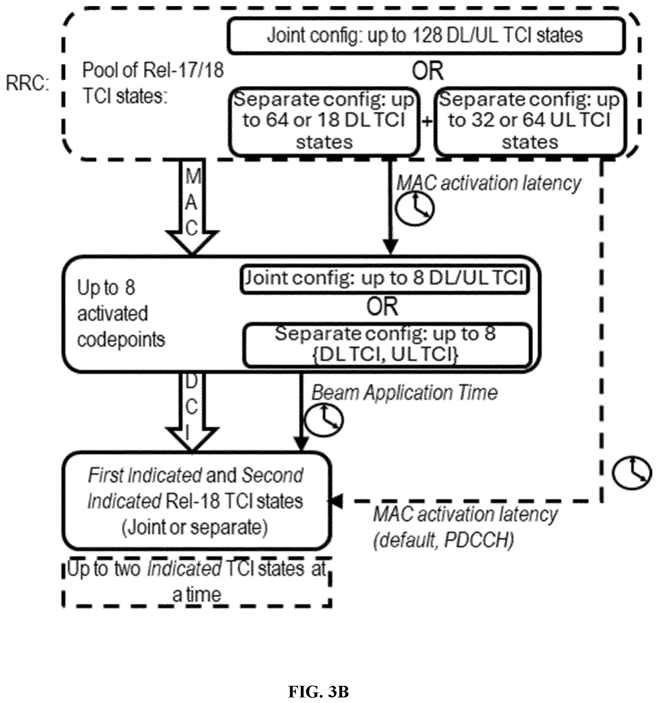

In some solutions, it introduces the unified TCI framework for s-TRP, with one indicated joint DL and UL at a time OR one indicated DL and one indicate UL TCI state at a time for the UE. An example of visual representation of unified TCI framework for s-TRP is shown in FIG. 3A. In some other solutions, it extends the unified TCI framework for m-TRP, with two indicated joint TCI states at a time or two indicated DL TCI states and two indicated UL TCI states at a time for the UE. An example of visual representation of unified TCI framework for m-TRP is shown in FIG. 3B.

In some solutions, UE-initiated beam management (UEIBM) is introduced. The UE-initiated TCI-state/beam reporting feature refers to the case where the UE may be configured with at least one event/condition, and then the UE may start TCI-state/beam reporting if this at least one event/condition occurs or is satisfied. Note that for UEIBM use case, L1 measurements are considered to trigger the events and reports.

It has been agreed to specify enhancement to facilitate UE-initiated/event-driven beam management for reducing overhead and/or latency, assuming the unified TCI while leveraging (as much as possible) legacy CSI measurement and reporting configuration frameworks, targeting FR2 and sTRP with intra- and inter-cell beam management: a) UL signaling content(s) (and procedure(s) as required) for UE-initiated/event-driven beam reporting facilitating fast beam switching; and b) UL signaling medium/container considering the UE-initiated/event-driven nature of the UL transmission, designed primarily for the purpose of beam reporting.

In some solutions, in the context of which event(s) may trigger a UEIBM report, the following has been proposed:

| | | |
|---|---|---|
| On UE-initiated/event-driven beam reporting, regarding trigger-event detection for beam reporting, at least support Event-2: Quality of at least one new beam, such as L1-RSRP, becomes a threshold value better than the current beam. | | |
| | - At least L1-RSRP is supported as quality metrics used for Event-2 | |
| | | • FFS: How the L1-RSRP is used to determine the triggering event (e.g. timer, counter, filter coefficient) |
| | | • FFS: Whether the network controls how the L1-RSRP is used to determine the triggering event |
| | - Regarding RS measurement for the new beam for Event-2, down-select one or more of the following: | |
| | | • Option-3a (explicit manner): The RS(s) for new beam(s) are explicitly configured by RRC (e.g., reusing legacy configuration of RS measurement or in *TCI-State*) or MAC-CE |
| | | • Option-3b (implicit manner): The RS(s) for new beam(s) are implicitly derived from QCL RS(s) of activated TCI state(s). |
| | | • Option-3c (implicit manner): The RS(s) for new beam(s) are implicitly derived from QCL RS(s) of configured TCI state(s). |
| | - Note-1: 'New/current beam' is for discussion purpose. | |
| | - Note-2: Other trigger events/quality metrics (e.g., L1-SINR) are not precluded. | |
| Note-3: For above implicit manner(s), if there are two QCL RSs in a TCI state, the measurement RS is derived from RS w.r.t. QCL-TypeD, if applicable. | | |
| On UE-initiated/event-driven beam reporting, regarding Event-2, the threshold value is RRC configured. | | |
| On UE-initiated/event-driven beam reporting, regarding trigger events, the following Event-1 and 7a/7b, are provided for down-selection or combination in RAN1#118 (possible outcome is that no new event is supported) | | |
| | | - Event-1: Quality of the current beam is worse than a certain threshold. |
| | | - Event-7a: Quality of at least one new beam, such as L1-RSRP, becomes a threshold value better than the RS derived from the activated TCI state with the **worst** quality. |
| | | - Event-7b: Quality of at least one new beam, such as L1-RSRP, becomes a threshold value better than the RS derived from the activated TCI state with the **best** quality. |

In some solutions, Event-2, where the quality of at least one new beam, such as L1-RSRP, becomes a "threshold value" better than the current beam, has been agreed as an event that can trigger a UEIBM report. For example, the network may configure the UE with a certain threshold, for example 6 dB, and when the UE measures a new beam to have a L1-RSRP which is 6 dB better than the L1-RSRP of the current beam, then a UEIBM report is triggered. Besides Event-2, some other events are currently under discussion, like Event-1, Event-7a and Event-7b.

In some other solutions, in the context of the content of these UEIBM reports, the following has been proposed:

| | | | |
|---|---|---|---|
| On UE-initiated/event-driven beam reporting, regarding UL signaling content(s) of L1-RSRP report depending on Event-2, in a report instance, the following options are provided for down-selection (other options are not precluded) | | | |
| Option-1 (variable size): N beam(s) are reported in the report instance, where N ∈{1, 2, ..., Nmax} | | | |
| | | | • The N beam(s) should satisfy the condition of Event-2 |
| | | | • Nmax is configured by gNB |
| | | | • FFS: Whether the indication of payload size should be provided additionally. |
| Option-1a (variable size): N beam(s) are reported in the report instance, where N ∈{1, 2, ..., Nmax} | | | |
| | | | • At least one of N reported beam(s) should satisfy the condition of Event-2 |
| | | | • Nmax is configured by gNB |
| | | | • FFS: Whether the indication of payload size should be provided additionally. |
| | | | • FFS: Details on how value of N is determined by the UE |
| Option-1b: N beam(s) are reported in the report instance, where N∈{1, 2, ..., Nmax} | | | |
| | | | • The N beam(s) should satisfy the condition of Event-2 |
| | | | • Nmax is configured by gNB |
| | | | • Payload size does not vary as a function of N |
| | | • FFS: Zero-padding can be provided if N is less than Nmax | |
| Option-2: Only N=1 beam is reported in the report instance | | | |
| | | • The reported beam should satisfy the condition of Event-2 | |
| Option-3: N ≥ 1 beam(s) are reported in the report instance, | | | |
| | | • At least one of N reported beam(s) should satisfy the condition of Event-2 | |
| | | • N is configured by gNB | |
| Other options are not precluded. | | | |
| FFS: Whether the measurement results for current beam is always reported or can be enabled by RRC. | | | |
| FFS: When current beam is reported, whether the current beam is counted in the N reported beams. | | | |
| The selected option shall satisfy Event-2. | | | |
| On UE-initiated/event-driven beam reporting, regarding UL signaling content(s) of L1-RSRP report depending on Event-2, in a report instance, at least Option-3 is supported | | | |
| | - Option-3: N ≥ 1 beam(s) are reported in the report instance, | | |
| | | • At least one of N reported beam(s) should satisfy the condition of Event-2 | |
| | | • N is configured by gNB | |
| | | | ◆ FFS: candidate value of 'N'. |
| | | • FFS: RRC can enable or disable whether current beam is always reported in addition to the N beams | |
| | - FFS: Option-1/1a/1b/2. | | |
| | - Above applies at least for the single CC case. | | |

Option-3 has up to now been agreed, where the UE reports N beams, with N≥1 configured by the network via RRC, and at least one of those N beams satisfies Event-2. Note that some other options are still under discussion, in particular Option 1, where the network configures the maximum number of beams Nₘₐₓ that can be reported by the UE, and then the UE reports N≤ Nₘₐₓ beams. Option 3 is a very simple baseline. On the other hand, Option 1 has the advantage to allow more flexibility, because it allows to adapt the number of beams to be reported in each occasion an event is triggered: we may have an event where the UE needs to report back 3 beams, and another where the UE just needs to send back 1 beam. Moreover Options 1/1a have this characteristic of "variable size of the report", which on one side is an advantage, as it allows using the appropriate number of resources to send back the report, but on the other side may also increase the complexity as the network may not know in advance what is the size of the report.

In some solutions, in the context of how these reports are sent back by the UE to the network, there may be the following proposals and assumptions:

| | | |
|---|---|---|
| On beam report transmission procedure for UE-initiated/event-driven beam reporting, following modes are supported: | | |
| Mode A (dynamically scheduling UCI by gNB): | | |
| | • Step 1: UE transmits a first PUCCH (one-bit/multi-bit) to request a resource for a second UL channel to carry beam report | |
| | | • FFS: Request format, e.g., SR or a new UCI type. |
| | • Step 2: UE detects the DCI format to indicate a resource for a second UL channel to carry beam report. | |
| | • Step 3: Beam report is transmitted in second UL channel. | |
| | | • FFS: Details on the second UL channel, e.g., whether the second UL channel is PUCCH, PUSCH or both |
| | • This mode is basic UE capability (i.e. all UE supporting UE-initiated/eventdriven beam reporting should support this feature). | |
| | • No | new DCI format is introduced. |
| Mode B (UCI in pre-configured resource(s) for second UL channel): | | |
| | • Step 1: UE transmits a first PUCCH (one-bit/multi-bit) notifying a second UL channel to carry beam report | |
| | | • FFS: Notification format, e.g., SR or a new UCI type. |
| | • Step 2: UE transmits the beam report in the second UL channel. | |
| | | • FFS: Details on the second UL channel, e.g., whether the second UL channel is PUCCH, PUSCH or both |
| | • The notification in Step1 is in a separate reporting instance from the beam report in Step 2. | |
| FFS: Whether UE receives acknowledge information with response to each step for all modes | | |
| For above procedures, cross-CC beam reporting is supported for both modes. | | |
| Assumption | | |
| On beam report transmission procedure for UE-initiated/event-driven beam reporting | | |
| | - For mode-A, at least support one-bit indication in the first PUCCH channel to request a resource for a second UL channel to carry beam report. | |
| | | o In such case, a periodic PUCCH resource (with PUCCH format 0/1) is configured by dedicated RRC signaling. |
| | - For mode-B, at least support one-bit indication in the first PUCCH channel to notify a second UL channel to carry beam report. | |
| | | o In such case, a periodic PUCCH resource (with PUCCH format 0/1) is configured by dedicated RRC signaling. |
| | - FFS: Whether/how to support multi-bit indication in the first PUCCH for mode-A and mode-B, e.g., when multi-event(s) are approved. | |
| | - FFS: details on the dedicated RRC signaling | |
| | - Above applies at least for the single CC case. | |

As discussed above, two procedures for actually sending back the report have been proposed. i.e., Mode A and Mode B.

In Mode B, the second UL channel is pre-configured. The second UL channel could be PUCCH or PUSCH or both, as illustrated in FIG. 1B. In the example of FIG. 1B, the network in Mode B pre-configures UL resources for UEIBM transmission in a periodic fashion for both PUCCH and PUSCH types of resources, e.g. interleaving PUCCH and PUSCH resources for UEIBM report.

At the same time, the UE could be reporting one or more beams in the UEIBM report. Nevertheless, network needs to know in advance how many beams to decode in the UEIBM report. This is because the number of bits for UEIBM report is varying according to the number of beams to report. Without this information, network shall perform blind detections with the consideration of all possible options. To clear this ambiguity, this invention provides the method to delivery additional information through the first channel and related operation for the second channel.

According to some embodiments of the present disclosure, a solution of UEIBM is proposed. In operation, the network may configure the UE such that different resources are associated with different number of beams reported. As one example embodiment, PUCCH resources may be associated with only 1 beam reported in UEIBM report and PUSCH resources may be associated with N beams (e.g., N=2/3/4) reported in UEIBM report.

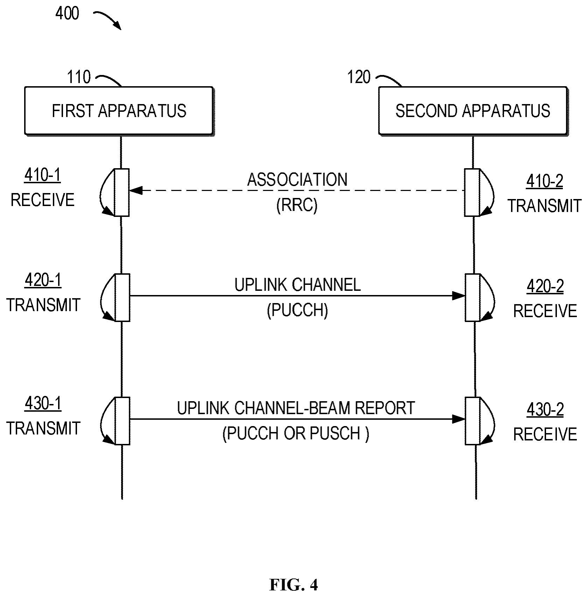

Details will be discussed with reference to FIG. 4, which illustrates a signaling flow 400 of communication in accordance with some embodiments of the present disclosure. For the purposes of discussion, the signaling flow 400 will be discussed with reference to FIG. 1A, for example, by using the first apparatus 110 and the second apparatus 120, where the first apparatus 110 may function as a terminal apparatus and the second apparatus 120 may function as a network apparatus.

It is to be understood that the operations at the first apparatus 110 and the second apparatus 120 should be coordinated. In other words, the second apparatus 120 and the first apparatus 110 should have a common understanding about configurations, parameters and so on. Such a common understanding may be implemented by any suitable interactions between the second apparatus 120 and the first apparatus 110 or both the second apparatus 120 and the first apparatus 110 applying the same rule, policy, and/or the like.

In the following, although some operations are described from a perspective of the first apparatus 110, it is to be understood that the corresponding operations should be performed by the second apparatus 120. Similarly, although some operations are described from a perspective of the second apparatus 120, it is to be understood that the corresponding operations should be performed by the first apparatus 110. Merely for brevity, some of the same or similar contents are omitted here.

As illustrated in FIG. 4, in operation, the first apparatus 110 transmits (420-1) an indication to the second apparatus 120 via an uplink control channel (such as, PUCCH, also refereed as a first (target) uplink control channel sometimes), and the second apparatus 120 receives (420-2) the indication accordingly. According to some embodiments of the present disclosure, the indication is associated with an uplink resource type (such as, PUCCH or PUSCH) to be used by the first apparatus 110 for a beam report (such as, UEIBM) in a further uplink channel (also referred to as a second (target) uplink channel sometimes) subsequent to the uplink control channel.

Then, the first apparatus 110 transmits (430-1) the beam report by using the further uplink channel with uplink resources of the uplink resource type to the second apparatus 120.

With this indication, the second apparatus 120 may determine the uplink resource type (and/or the uplink occasion for the beam report) accordingly. As a result, the second apparatus 120 receives (430-2) the beam report from the first apparatus 110.

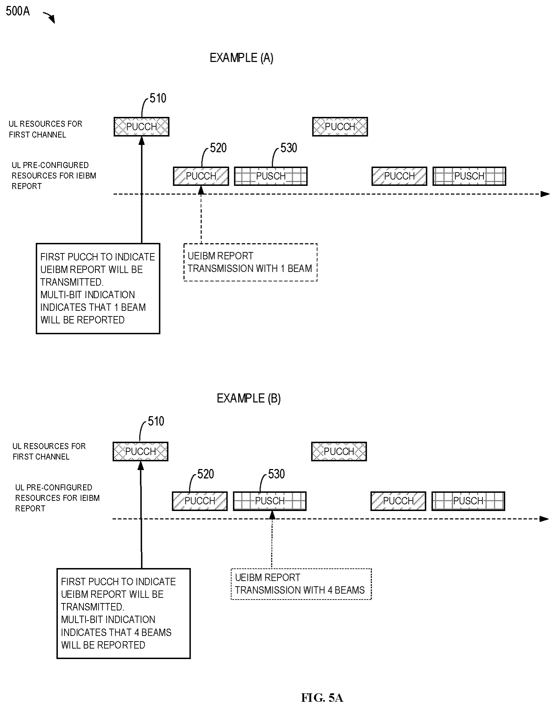

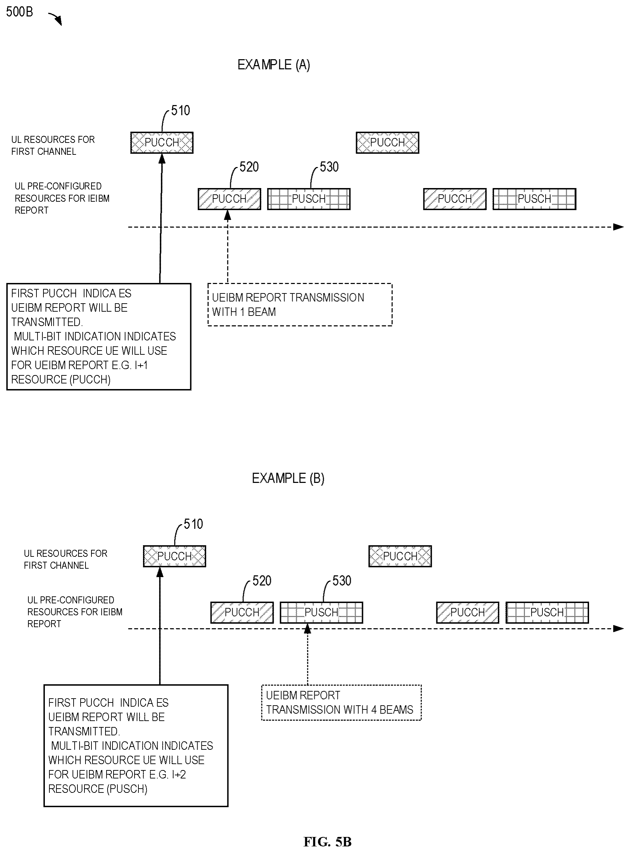

In some example embodiments, uplink resources may be pre-configured by the second apparatus 120 for a transmission of the beam report with an interleaved pattern of different uplink resource types. Reference is made to FIG. 5A and 5B, which illustrate example diagrams 500A and 500B for beam reporting. In the example of FIG. 5A and 5B, PUCCH resources/occasions and PUSCH resources/occasions are interleaved.

According to some embodiments of the present disclosure, there may be an association between the uplink resource type and the number of beams to be reported. In this event, the first apparatus 110 may obtain an association between different uplink resource types and corresponding allowed beam numbers to be reported.

Additionally, the association may be provided by the second apparatus 120. Specifically, the second apparatus 120 may determine the association between different uplink resource types and corresponding allowed beam numbers to be reported. Then, as illustrated in FIG. 4, the second apparatus 120 may transmit (410-2) the association the first apparatus 110 via an RRC signalling, and the first apparatus 110 may receive (410-1) the association accordingly.

With the obtained association, the fist apparatus 110 may determine the uplink resource type for the beam report accordingly. Specifically, the first apparatus 110 may determine the number of beams to be reported and then may determine the uplink resource type to be used for the beam report based on the number of beams to be reported and the association.

In some example embodiments, if the number of beams to be reported is lower than a threshold number (such as, smaller than 2/equal to 1), the fist apparatus 110 may determine that uplink control channel resources are to be used for the beam report. Alternatively, if the number of beams to be reported equals to or exceeds a threshold number (such as, threshold number is 2), the fist apparatus 110 may determine that uplink data channel resources are to be used for the beam report. As used herein, "uplink control channel resources" relates to "PUCCH" and "uplink data channel resources" relates to PUSCH.

According to some embodiments of the present disclosure, the first apparatus 110 may transmit the indication indicating the determined uplink resource type implicitly to the first apparatus 110, such as, via the number of beams to be reported. Additionally, the number of beams may be indicated in the indication by multi-bit or a single bit. As for the second apparatus 120, the second apparatus 120 may obtain a number of beams to be reported by the first apparatus 110 in the UEIBM report via the further uplink channel from the indication, and then may determine the uplink resource type based on the number of beams and the association.

In some embodiments, the first apparatus 110 may determine the number of beams to be reported, and then may transmit the indication indicating the number of beams. In operation, UE may use an indication in the first UL channel to indicate to the network the number of beams that UE will send in the UEIBM report. Such indication in the first UL channel may be either multi-bit or single-bit (single-bit is applicable in cases where two possible number of beams are available for the second UL channel, for example PUSCH/PUCCH, using bit=1 for PUSCH with N=4 beams and bit=0 for PUCCH with N=1 beam). According to the association between UL resource type (PUCCH or PUSCH) and the number of beams to be reported, the network will know on which UL resource the UE will transmit on the UEIBM report. More details are discussed in below example embodiments.

For a better understanding, reference is now made to FIG. 5A. In the example of FIG. 5A, a multi-bit indication may be used to indicate to the network (NW) how many beams need to be transmitted in the UEIBM report, and further optionally there may be an implicit association between the number of Beams to be reported and the UL resource to be used by UE for UEIBM report.

In the example (A) of FIG. 5A, the first apparatus 110 transmits an indication to the second apparatus 120 via PUCCH 510, where the indication may indicate that 1 beam will be reported via a multi-bit indication (or single-bit indication). In this event, the beam report will be transmitted via PUCCH 520 rather than PUSCH 530.

In the example (B) of FIG. 5A, the first apparatus 110 transmits via PUCCH 510 an indication to the second apparatus 120, where the indication may indicate that 4 beams will be reported via a multi-bit indication. In this event, the beam report will be transmitted via PUSCH 530 rather than PUCCH 520.

Alternatively, according to some embodiments of the present disclosure, the first apparatus 110 may transmit the indication indicating the determined uplink resource type explicitly to the first apparatus 110, such as, via a resource index, an uplink resource type index and so on. As for the second apparatus 120, the second apparatus 120 may determine the uplink resource type based on the indication indicating the uplink resource type explicitly.

In operation, the UE may use indication in the first UL channel to indicate to the network which UL resource it will use (following PUCCH or following PUSCH) to transmit the UEIBM report. Such indication in the first UL channel may be either a multi-bit or single-bit (single-bit only in case just two UL resource types are possible for the second UL channel, for example with just PUSCH/PUCCH, using bit=1 for PUSCH and bit=0 for PUCCH). Based on the association between UL resource type (PUCCH or PUSCH) and the number of beams to be reported, the network will know how many beams will be reported by the UE in UEIBM report.

For a better understanding, reference is now made to FIG. 5B. In the example of FIG. 5B, a multi-bit indication is used to indicate to NW which UL pre-configured resource will be used by UE to transmit the UEIBM report, and optionally there may be an implicit association between the UL resource to be used by UE for the beam report and the number of beams to be reported.

In the example (A) of FIG. 5B, the first apparatus 110 transmits via PUCCH 510 an indication to the second apparatus 120, where the indication may indicate resource i+1 will be used for the beam report. In this event, the beam report will be transmitted via PUCCH 520 rather than PUSCH 530.

In the example (B) of FIG. 5B, the first apparatus 110 transmits via PUCCH 510 an indication to the second apparatus 120, where the indication may indicate resource i+2 will be used for the beam report. In this event, the beam report will be transmitted via PUSCH 530 rather than PUCCH 520.

According to some embodiments of the present disclosure, the first apparatus 110 may implement the UEIBM procedure in a more flexible manner as discussed below, where the transition of the first uplink channel and/or the beam report may be more flexible.

In some example embodiments, UE may use single bit indication in the first UL channel (i.e. no information of number of beams or which resource for second UL channel) and UE autonomously chooses/delays either the first UL channel indication or the UEIBM report to the corresponding UL resource type fitting the number of beams UE has to transmit. Such example embodiments are also applicable in case UE uses multi-bit indication but the multiple bits are used for something else than indicating the number of beams, they may for example be used to indicate the event type that triggered the report, event-2 or event-1 or another when the UE is configured with multiple events. More details will be further discussed with reference to FIG. 4.

In operation, as illustrated in FIG. 4, the first apparatus 110 transmit (420-1) an indication to the second apparatus 120 via a first target uplink control channel, and the second apparatus 120 receives (420-2) the indication accordingly. According to some embodiments of the present disclosure, the indication is used for notifying a beam report to be transmitted in a second target uplink channel subsequent to the first target uplink control channel.

The first apparatus 110 also determine uplink resource type to be used for transmitting the report via the second target uplink channel based on a number of beams to be reported. Then, the first apparatus 110 transmits (430-1) the beam report via the second target uplink channel selected at least based on the determined uplink resource type to the second apparatus 120. The second apparatus 120 receives (430-2) the beam report accordingly.

In some example embodiments, the indication may comprise a single bit indication or a multi-bit indication.

Additionally, in some example embodiments, the multi-bit indication indicates event type that triggered the report.

In the following, more example embodiments about the UEIBM procedure will be discussed.

In some example embodiments, if the first available candidate uplink channel are uplink control channel resources and the number of beams exceeds a threshold number, the first apparatus 110 may skip the first available candidate uplink channel and/or wait for a second candidate uplink channel subsequent to the first candidate uplink channel. Additionally, in some example embodiments, if uplink resources of the second candidate uplink channel are uplink data channel resources, the first apparatus 110 may determine the second candidate uplink channel as the second target uplink channel for transmitting the report.

In some example embodiments, if uplink resources of a first candidate uplink channel are uplink data channel resources and the number of beams does not exceed a threshold number, the first apparatus 110 may skip the first candidate uplink channel and/or wait for a second candidate uplink channel subsequent to the first candidate uplink channel. Additionally, in some example embodiments, if uplink resources of the second candidate uplink channel are uplink control channel resources, the first apparatus 110 may determine the second candidate uplink channel as the second target uplink channel for transmitting the report.

In some example embodiments, if uplink resources of a first candidate uplink channel are uplink control channel resources and the number of beams does not exceed a threshold number, the first apparatus 110 may determine the first candidate uplink channel as the second target uplink channel for transmitting the report.

In some example embodiments, if uplink resources of a first candidate uplink channel are uplink data channel resources and the number of beams exceeds a threshold number, the first apparatus 110 may determine the first candidate uplink channel as the second target uplink channel for transmitting the report.

In some example embodiments, the first apparatus 110 may determine the first target uplink control channel for transmitting the indication based on the number of beams to be reported and an uplink resource allocation with interleaved uplink control channel resources and uplink data channel resources.

As one example embodiment, if the number of beams exceeds a threshold number and uplink resources of a first candidate uplink channel, that is subsequent to an uplink control channel, are uplink data channel resources, the first apparatus 110 may determine the uplink control channel as the first target uplink control channel for transmitting the indication and the first candidate uplink channel as the second target uplink channel for transmitting the report.

As another example embodiment, if the number of beams exceeds a threshold number and uplink resources of a first candidate uplink channel, that is subsequent to an uplink control channel, are uplink control channel resources, the first apparatus 110 may skip the uplink control channel, and/or wait for a further uplink control channel after which a second candidate uplink channel with uplink data channel resources is configured.

In a further example embodiment, if the number of beams does not exceed a threshold number and uplink resources of a first candidate uplink channel, that is subsequent to an uplink control channel, are uplink data channel resources, the first apparatus 110 may skip the uplink control channel, and/or wait for a further uplink control channel after which a second candidate uplink channel with uplink control channel resources is configured.

In some example embodiments, if the number of beams does not exceed a threshold number and uplink resources of a first candidate uplink channel, that is subsequent to an uplink control channel, are uplink control channel resources, the first apparatus 110 may determine the uplink control channel as the first target uplink control channel for transmitting the indication and the first candidate uplink channel as the second target uplink channel for transmitting the report.

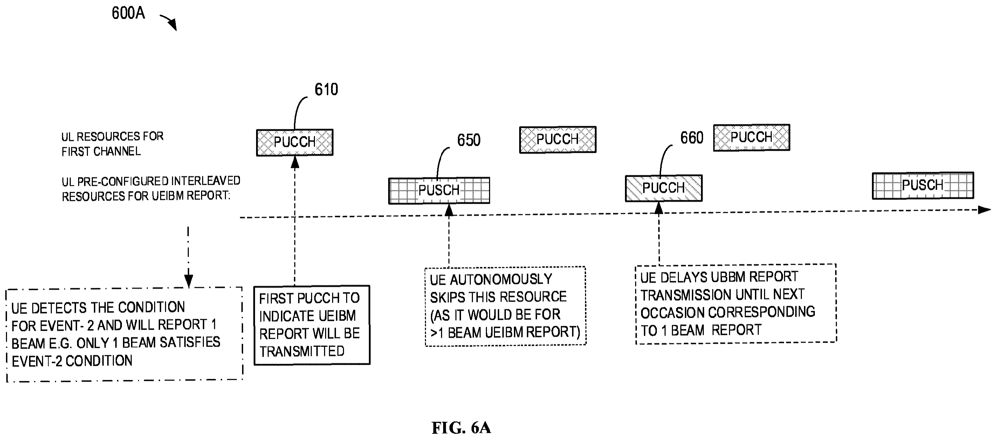

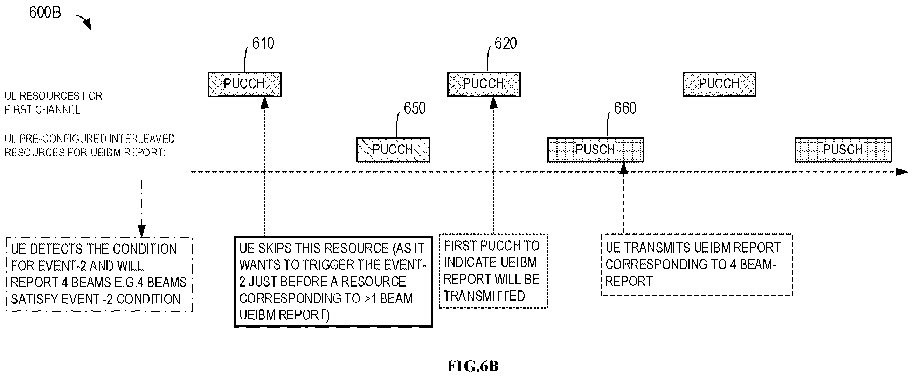

For a better understanding, reference is made to FIG. 6A and FIG. 6B, which illustrate example diagrams 600A and 600B for beam reporting. In the examples of FIG. 6A and FIG. 6B, UE autonomously triggers the first PUCCH or the UEIBM report to the UL resource corresponding to the number of beams to be transmitted. Single-bit PUCCH or multi-bit PUCCH (where the multi-bit may refer to e.g. event type triggering the report) are applicable. Further, there may be an implicit association between the UL resource chosen by UE for triggering the event or for the UBEM report and the number of beams that are reported

In the example of FIG. 6A, the number of beams to be reported is 1, the first apparatus 110 may transmit an indication to the second apparatus 120 via PUCCH 610. According to the reporting rule, the beam report may be transmitted on PUCCH. However, the next transmission occasion is PUSCH 650. In this event, the first apparatus 110 may skip the PUSCH 650 and wait for the PUCCH 660.

Further reference is made to FIG. 6B, which illustrate example diagrams 600B for beam reporting. In the example of FIG. 6B, the number of beams to be reported is 4, which means that the beam report needs to be transmitted on PUSCH. However, the next transmission occasion is PUCCH 650. In this event, the first apparatus 110 may skip the PUCCH 610 and wait for the PUCCH 620.

An example use case is discussed as below. A gNB indicates a TCI state (current beam) and configures UEIBM reports associated with a pool of monitoring beams. gNB also configures the UL resources for the second UL channel (i.e., for the UEIBM report), such as the pre-configured UL resources illustrated in FIG. 6A and 6B.

In some cases, the number and the power of the DL RS are changed. For example, gNB schedules the transmission of DL RS of only 1 beam that is at least 3 dB better than current beam, before a pre-configured PUSCH resource as second UL channel. In this event, the UE may skip the pre-configured PUSCH resource and autonomously chooses to send the UEIBM report on the PUCCH resource.

Similarly, in a case that gNB schedules the transmission of 4 DL RS for 4 beams that are at least 3 dB better than current beam, before a pre-configured PUCCH resource as second UL channel, UE may skip the pre-configured PUCCH resource and autonomously chooses to send the UEIBM report on the PUSCH resource and reports all four beams satisfying the condition.

### Example Method

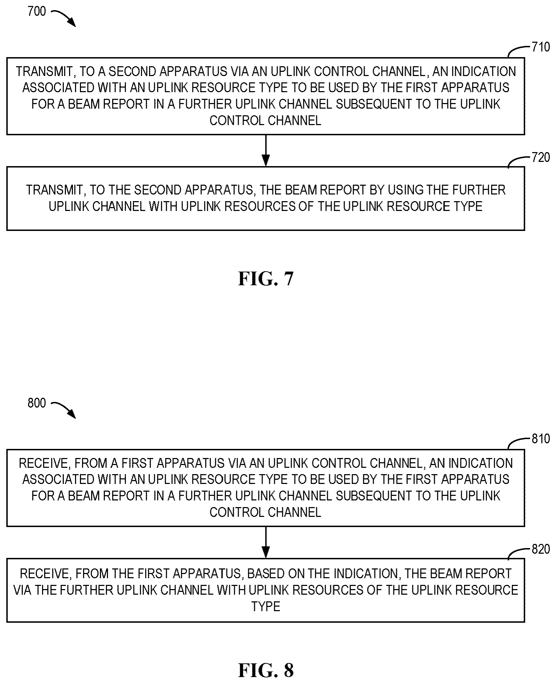

FIG. 7 shows a flowchart of an example method 700 implemented at a first apparatus in accordance with some example embodiments of the present disclosure. For the purpose of discussion, the method 700 will be described from the perspective of the first apparatus 110 in FIG. 1A.

At block 710, the first apparatus transmits, to a second apparatus via an uplink control channel, an indication associated with an uplink resource type to be used by the first apparatus for a beam report in a further uplink channel subsequent to the uplink control channel.

At block 720, the first apparatus transmits, to the second apparatus, the beam report by using the further uplink channel with uplink resources of the uplink resource type.

In some example embodiments, the first apparatus obtains an association between different uplink resource types and corresponding allowed beam numbers to be reported; determining the number of beams to be reported; determines the uplink resource type to be used for the beam report based on the number of beams to be reported and the association; and transmits, to the first apparatus the indication indicating the determined uplink resource type explicitly.

In some example embodiments, the first apparatus receives the association from the second apparatus via a radio resource control, RRC, signaling.

In some example embodiments, in accordance with a determination that the number of beams to be reported is lower than a threshold number, the first apparatus determines that uplink control channel resources are to be used for the beam report.

In some example embodiments, in accordance with a determination that the number of beams to be reported equals to or exceeds a threshold number, the first apparatus determines that uplink data channel resources are to be used for the beam report.

In some example embodiments, the first apparatus determines the number of beams to be reported; and transmits the indication indicating the number of beams with a multi-bit indication.

In some example embodiments, the first apparatus determines the number of beams to be reported; and transmits the indication indicating the number of beams with a single bit indication.

In some example embodiments, uplink resources are pre-configured by the second apparatus for a transmission of the beam report with an interleaved pattern of different uplink resource types.

In some example embodiments, the first apparatus comprises a terminal device and the second apparatus comprises a network device.

FIG. 8 shows a flowchart of an example method 800 implemented at a second apparatus in accordance with some example embodiments of the present disclosure. For the purpose of discussion, the method 800 will be described from the perspective of the second apparatus 120 in FIG. 1A.

At block 810, the second apparatus receives, from a first apparatus via an uplink control channel, an indication associated with an uplink resource type to be used by the first apparatus for a beam report in a further uplink channel subsequent to the uplink control channel.

At block 820, the second apparatus receives, from the first apparatus, based on the indication, the beam report via the further uplink channel with uplink resources of the uplink resource type.

In some example embodiments, the second apparatus determines an association between different uplink resource types and corresponding allowed beam numbers to be reported; and provides the association to the first apparatus.

In some example embodiments, the second apparatus provides the association to the first apparatus via an RRC signaling.

In some example embodiments, the second apparatus obtains, from the indication, a number of beams to be reported by the first apparatus in the beam report via the further uplink channel; and determines the uplink resource type based on the number of beams and the association.

In some example embodiments, the number of beams is indicated in the indication by a multi-bit indication.

In some example embodiments, the number of beams is indicated in the indication by a single bit indication.

In some example embodiments, the second apparatus determines the uplink resource type based on the indication indicating the uplink resource type explicitly.

In some example embodiments, uplink resources are pre-configured by the second apparatus for a transmission of the beam report with an interleaved pattern of different uplink resource types.

In some example embodiments, the first apparatus comprises a terminal device and the second apparatus comprises a network device.

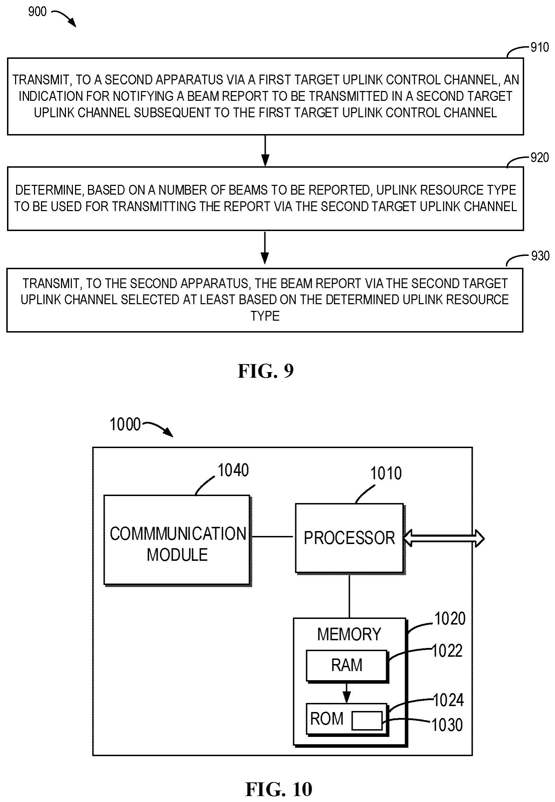

FIG. 9 shows a flowchart of an example method 900 implemented at a first apparatus in accordance with some example embodiments of the present disclosure. For the purpose of discussion, the method 900 will be described from the perspective of the first apparatus 110 in FIG. 1A.

At block 910, the first apparatus transmits, to a second apparatus via a first target uplink control channel, an indication for notifying a beam report to be transmitted in a second target uplink channel subsequent to the first target uplink control channel.

At block 920, the first apparatus determines, based on a number of beams to be reported, uplink resource type to be used for transmitting the report via the second target uplink channel.

At block 930, the first apparatus transmits, to the second apparatus, the beam report via the second target uplink channel selected at least based on the determined uplink resource type.

In some example embodiments, in accordance with a determination that uplink resources of a first candidate uplink channel are uplink control channel resources and the number of beams exceeds a threshold number, the first apparatus skips the first candidate uplink channel; and waits for a second candidate uplink channel subsequent to the first candidate uplink channel.

In some example embodiments, in accordance with a determination that uplink resources of the second candidate uplink channel are uplink data channel resources, the first apparatus determines the second candidate uplink channel as the second target uplink channel for transmitting the beam report.

In some example embodiments, in accordance with a determination that uplink resources of a first candidate uplink channel are uplink data channel resources and the number of beams does not exceed a threshold number, the first apparatus skips the first candidate uplink channel; and waits for a second candidate uplink channel subsequent to the first candidate uplink channel.

In some example embodiments, in accordance with a determination that uplink resources of the second candidate uplink channel are uplink control channel resources, the first apparatus determines the second candidate uplink channel as the second target uplink channel for transmitting the beam report.

In some example embodiments, in accordance with a determination that uplink resources of a first candidate uplink channel are uplink control channel resources and the number of beams does not exceed a threshold number, the first apparatus determines the first candidate uplink channel as the second target uplink channel for transmitting the beam report.

In some example embodiments, in accordance with a determination that uplink resources of a first candidate uplink channel are uplink data channel resources and the number of beams exceeds a threshold number, the first apparatus determines the first candidate uplink channel as the second target uplink channel for transmitting the beam report.

In some example embodiments, the first apparatus determines the first target uplink control channel for transmitting the indication based on the number of beams to be reported and an uplink resource allocation with interleaved uplink control channel resources and uplink data channel resources.

In some example embodiments, in accordance with a determination that the number of beams exceeds a threshold number and uplink resources of a first candidate uplink channel, that is subsequent to an uplink control channel, are uplink data channel resources, the first apparatus determines the uplink control channel as the first target uplink control channel for transmitting the indication and the first candidate uplink channel as the second target uplink channel for transmitting the beam report.

In some example embodiments, in accordance with a determination that the number of beams exceeds a threshold number and uplink resources of a first candidate uplink channel, that is subsequent to an uplink control channel, are uplink control channel resources, the first apparatus skips the uplink control channel; and waits for a further uplink control channel after which a second candidate uplink channel with uplink data channel resources is configured.

In some example embodiments, in accordance with a determination that the number of beams does not exceed a threshold number and uplink resources of a first candidate uplink channel, that is subsequent to an uplink control channel, are uplink data channel resources, the first apparatus skips the uplink control channel; and waits for a further uplink control channel after which a second candidate uplink channel with uplink control channel resources is configured.

In some example embodiments, in accordance with a determination that the number of beams does not exceed a threshold number and uplink resources of a first candidate uplink channel, that is subsequent to an uplink control channel, are uplink control channel resources, the first apparatus determines the uplink control channel as the first target uplink control channel for transmitting the indication and the first candidate uplink channel as the second target uplink channel for transmitting the beam report.

In some example embodiments, indication comprises a single bit indication or a multi-bit indication.

In some example embodiments, the multi-bit indication indicates event type that triggered the beam report.

In some example embodiments, the first apparatus comprises a terminal device and the second apparatus comprises a network device.

### Example Apparatus, Device and Medium

In some example embodiments, a first apparatus capable of performing any of the method 700 (for example, the first apparatus 110 in FIG. 1) may comprise means for performing the respective operations of the method 700. The means may be implemented in any suitable form. For example, the means may be implemented in a circuitry or software module. The first apparatus may be implemented as or included in the first apparatus 110 in FIG. 1A.

In some example embodiments, the first apparatus comprises means for transmitting, to a second apparatus via an uplink control channel, an indication associated with an uplink resource type to be used by the first apparatus for a beam report in a further uplink channel subsequent to the uplink control channel; and means for transmitting, to the second apparatus, the beam report by using the further uplink channel with uplink resources of the uplink resource type.

In some example embodiments, the first apparatus further comprises: means for obtaining an association between different uplink resource types and corresponding allowed beam numbers to be reported; means for determining the number of beams to be reported; means for determining the uplink resource type to be used for the beam report based on the number of beams to be reported and the association; and means for transmitting, to the first apparatus the indication indicating the determined uplink resource type explicitly.

In some example embodiments, the first apparatus further comprises: means for receiving the association from the second apparatus via a radio resource control, RRC, signaling.

In some example embodiments, the first apparatus further comprises: means for, in accordance with a determination that the number of beams to be reported is lower than a threshold number, determining that uplink control channel resources are to be used for the beam report.

In some example embodiments, the first apparatus further comprises: means for in accordance with a determination that the number of beams to be reported equals to or exceeds a threshold number, determining that uplink data channel resources are to be used for the beam report.

In some example embodiments, the first apparatus further comprises: means for determining the number of beams to be reported; and means for transmitting the indication indicating the number of beams with a multi-bit indication.

In some example embodiments, the first apparatus further comprises: means for determining the number of beams to be reported; and means for transmitting the indication indicating the number of beams with a single bit indication.

In some example embodiments, uplink resources are pre-configured by the second apparatus for a transmission of the beam report with an interleaved pattern of different uplink resource types.

In some example embodiments, the first apparatus comprises a terminal device and the second apparatus comprises a network device.

In some example embodiments, a second apparatus capable of performing any of the method 800 (for example, the second apparatus 120 in FIG. 1) may comprise means for performing the respective operations of the method 800. The means may be implemented in any suitable form. For example, the means may be implemented in a circuitry or software module. The second apparatus may be implemented as or included in the second apparatus 120 in FIG. 1A.

In some example embodiments, the second apparatus comprises means for receiving, from a first apparatus via an uplink control channel, an indication associated with an uplink resource type to be used by the first apparatus for a beam report in a further uplink channel subsequent to the uplink control channel; and means for receiving, from the first apparatus, based on the indication, the beam report via the further uplink channel with uplink resources of the uplink resource type.

In some example embodiments, the second apparatus further comprises: means for determining an association between different uplink resource types and corresponding allowed beam numbers to be reported; and means for providing the association to the first apparatus.

In some example embodiments, the second apparatus further comprises: means for providing the association to the first apparatus via an RRC signaling.

In some example embodiments, the second apparatus further comprises: means for obtaining, from the indication, a number of beams to be reported by the first apparatus in the beam report via the further uplink channel; and means for determining the uplink resource type based on the number of beams and the association.

In some example embodiments, the number of beams is indicated in the indication by a multi-bit indication.

In some example embodiments, the number of beams is indicated in the indication by a single bit indication.

In some example embodiments, the second apparatus further comprises: means for determining the uplink resource type based on the indication indicating the uplink resource type explicitly.

In some example embodiments, uplink resources are pre-configured by the second apparatus for a transmission of the beam report with an interleaved pattern of different uplink resource types.

In some example embodiments, the first apparatus comprises a terminal device and the second apparatus comprises a network device.

In some example embodiments, a first apparatus capable of performing any of the method 900 (for example, the first apparatus 110 in FIG. 1) may comprise means for performing the respective operations of the method 900. The means may be implemented in any suitable form. For example, the means may be implemented in a circuitry or software module. The first apparatus may be implemented as or included in the first apparatus 110 in FIG. 1A.

In some example embodiments, the first apparatus comprises means for transmitting, to a second apparatus via a first target uplink control channel, an indication for notifying a beam report to be transmitted in a second target uplink channel subsequent to the first target uplink control channel; means for determining, based on a number of beams to be reported, uplink resource type to be used for transmitting the beam report via the second target uplink channel; and means for transmitting, to the second apparatus, the beam report via the second target uplink channel selected at least based on the determined uplink resource type.

In some example embodiments, the first apparatus further comprises: means for, in accordance with a determination that uplink resources of a first candidate uplink channel are uplink control channel resources and the number of beams exceeds a threshold number, skipping the first candidate uplink channel; and means for waiting for a second candidate uplink channel subsequent to the first candidate uplink channel.

In some example embodiments, the first apparatus further comprises: means for, in accordance with a determination that uplink resources of the second candidate uplink channel are uplink data channel resources, determining the second candidate uplink channel as the second target uplink channel for transmitting the beam report.

In some example embodiments, the first apparatus further comprises: means for, in accordance with a determination that uplink resources of a first candidate uplink channel are uplink data channel resources and the number of beams does not exceed a threshold number, skipping the first candidate uplink channel; and means for waiting for a second candidate uplink channel subsequent to the first candidate uplink channel.

In some example embodiments, the first apparatus further comprises: means for, in accordance with a determination that uplink resources of the second candidate uplink channel are uplink control channel resources, determining the second candidate uplink channel as the second target uplink channel for transmitting the beam report.

In some example embodiments, the first apparatus further comprises: means for, in accordance with a determination that uplink resources of a first candidate uplink channel are uplink control channel resources and the number of beams does not exceed a threshold number, determining the first candidate uplink channel as the second target uplink channel for transmitting the beam report.

In some example embodiments, the first apparatus further comprises: means for, in accordance with a determination that uplink resources of a first candidate uplink channel are uplink data channel resources and the number of beams exceeds a threshold number, determining the first candidate uplink channel as the second target uplink channel for transmitting the beam report.

In some example embodiments, the first apparatus further comprises: means for determining the first target uplink control channel for transmitting the indication based on the number of beams to be reported and an uplink resource allocation with interleaved uplink control channel resources and uplink data channel resources.

In some example embodiments, the first apparatus further comprises: means for, in accordance with a determination that the number of beams exceeds a threshold number and uplink resources of a first candidate uplink channel, that is subsequent to an uplink control channel, are uplink data channel resources, determining the uplink control channel as the first target uplink control channel for transmitting the indication and the first candidate uplink channel as the second target uplink channel for transmitting the beam report.

In some example embodiments, the first apparatus further comprises: means for, in accordance with a determination that the number of beams exceeds a threshold number and uplink resources of a first candidate uplink channel, that is subsequent to an uplink control channel, are uplink control channel resources, skip the uplink control channel; and means for waiting for a further uplink control channel after which a second candidate uplink channel with uplink data channel resources is configured.

In some example embodiments, the first apparatus further comprises: means for, in accordance with a determination that the number of beams does not exceed a threshold number and uplink resources of a first candidate uplink channel, that is subsequent to an uplink control channel, are uplink data channel resources, skipping the uplink control channel; and means for waiting for a further uplink control channel after which a second candidate uplink channel with uplink control channel resources is configured.

In some example embodiments, the first apparatus further comprises: means for, in accordance with a determination that the number of beams does not exceed a threshold number and uplink resources of a first candidate uplink channel, that is subsequent to an uplink control channel, are uplink control channel resources, determining the uplink control channel as the first target uplink control channel for transmitting the indication and the first candidate uplink channel as the second target uplink channel for transmitting the beam report.

In some example embodiments, indication comprises a single bit indication or a multi-bit indication.

In some example embodiments, the multi-bit indication indicates event type that triggered the beam report.

In some example embodiments, the beam report is a user equipment (UE)-initiated beam report.

In some example embodiments, the first apparatus comprises a terminal device and the second apparatus comprises a network device.

FIG. 10 is a simplified block diagram of a device 1000 that is suitable for implementing example embodiments of the present disclosure. The device 1000 may be provided to implement a communication device, for example, the first apparatus 110 or the second apparatus 120 as shown in FIG. 1A. As shown, the device 1000 includes one or more processors 1010, one or more memories 1020 coupled to the processor 1010, and one or more communication modules 1040 coupled to the processor 1010.

The communication module 1040 is for bidirectional communications. The communication module 1040 has one or more communication interfaces to facilitate communication with one or more other modules or devices. The communication interfaces may represent any interface that is necessary for communication with other network elements. In some example embodiments, the communication module 1040 may include at least one antenna.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1022 and other volatile memories that will not last in the power-down duration.

A computer program 1030 includes computer executable instructions that are executed by the associated processor 1010. The instructions of the program 1030 may include instructions for performing operations/acts of some example embodiments of the present disclosure. The program 1030 may be stored in the memory, e.g., the ROM 1024. The processor 1010 may perform any suitable actions and processing by loading the program 1030 into the RAM 1022.

The example embodiments of the present disclosure may be implemented by means of the program 1030 so that the device 1000 may perform any process of the disclosure as discussed with reference to FIG. 2 to FIG. 9. The example embodiments of the present disclosure may also be implemented by hardware or by a combination of software and hardware.

In some example embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

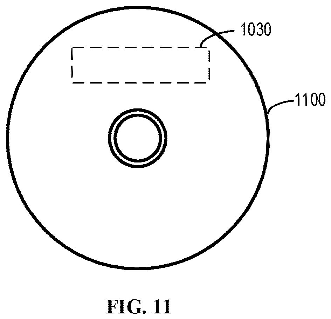

FIG. 11 shows an example of the computer readable medium 1100 which may be in form of CD, DVD or other optical storage disk. The computer readable medium 1100 has the program 1030 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computerexecutable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus comprising:
at least one processor; and
at least one memory storing instructions that, when executed by the at least one processor, cause the first apparatus at least to:
transmit, to a second apparatus via a first target uplink control channel, an indication for notifying a beam report to be transmitted in a second target uplink channel subsequent to the first target uplink control channel;
determine, based on a number of beams to be reported and a type of uplink resources of a first candidate uplink channel, whether the first candidate uplink channel is to be skipped; and
in accordance with a determination that the first candidate uplink channel is to be skipped, wait for a second candidate uplink channel, subsequent to the first candidate uplink channel, for a second target uplink channel on which the beam report is to be transmitted to the second apparatus.

2. The first apparatus of claim 1, wherein the first apparatus is caused to:
in accordance with a determination that uplink resources of the first candidate uplink channel are uplink control channel resources and the number of beams exceeds a threshold number, skip the first candidate uplink channel.

3. The first apparatus of claim 2, wherein the first apparatus is caused to:
in accordance with a determination that uplink resources of the second candidate uplink channel are uplink data channel resources, determine the second candidate uplink channel as the second target uplink channel for transmitting the beam report; and
transmit, to the second apparatus, the beam report via the second target uplink channel.

4. The first apparatus of claim 1, wherein the first apparatus is caused to:
in accordance with a determination that uplink resources of the first candidate uplink channel are uplink data channel resources and the number of beams does not exceed a threshold number, skip the first candidate uplink channel.

5. The first apparatus of claim 4, wherein the first apparatus is caused to:
in accordance with a determination that uplink resources of the second candidate uplink channel are uplink control channel resources, determine the second candidate uplink channel as the second target uplink channel for transmitting the beam report; and
transmit, to the second apparatus, the beam report via the second target uplink channel.

6. The first apparatus of claim 1, wherein the first apparatus is caused to:
in accordance with a determination that uplink resources of the first candidate uplink channel are uplink control channel resources and the number of beams does not exceed a threshold number, transmit, to the second apparatus, the beam report via the first candidate uplink channel.

7. The first apparatus of claim 1, wherein the first apparatus is caused to:
in accordance with a determination that uplink resources of the first candidate uplink channel are uplink data channel resources and the number of beams exceeds a threshold number, determine the first candidate uplink channel as the second target uplink channel for transmitting the beam report, transmit, to the second apparatus, the beam report via the first candidate uplink channel.

8. The first apparatus of claim 1, wherein the first apparatus is caused to:
determine the first target uplink control channel for transmitting the indication based on the number of beams to be reported and an uplink resource allocation with interleaved uplink control channel resources and uplink data channel resources.

9. The first apparatus of claim 8, wherein the first apparatus is caused to:
in accordance with a determination that the number of beams exceeds a threshold number and uplink resources of a first candidate uplink channel, that is subsequent to an uplink control channel, are uplink data channel resources, determine the uplink control channel as the first target uplink control channel for transmitting the indication and the first candidate uplink channel as the second target uplink channel for transmitting the beam report.

10. The first apparatus of claim 8, wherein the first apparatus is caused to:
in accordance with a determination that the number of beams exceeds a threshold number and uplink resources of a first candidate uplink channel, that is subsequent to an uplink control channel, are uplink control channel resources, skip the uplink control channel; and
wait for a further uplink control channel after which a second candidate uplink channel with uplink data channel resources is configured.

11. The first apparatus of claim 8, wherein the first apparatus is caused to:
in accordance with a determination that the number of beams does not exceed a threshold number and uplink resources of a first candidate uplink channel, that is subsequent to an uplink control channel, are uplink data channel resources, skip the uplink control channel; and
wait for a further uplink control channel after which a second candidate uplink channel with uplink control channel resources is configured.

12. The first apparatus of claim 8, wherein the first apparatus is caused to:
in accordance with a determination that the number of beams does not exceed a threshold number and uplink resources of a first candidate uplink channel, that is subsequent to an uplink control channel, are uplink control channel resources, determine the uplink control channel as the first target uplink control channel for transmitting the indication and the first candidate uplink channel as the second target uplink channel for transmitting the beam report.

13. The first apparatus of any of claims 1-12, wherein indication indicates event type that triggered the beam report.

14. The first apparatus of any of claims 1-13, wherein the beam report is a user equipment (UE)-initiated beam report.

15. The first apparatus of any of claims 1-14, wherein the first apparatus comprises a terminal device and the second apparatus comprises a network device.

16. A method comprising:
transmitting, to a second apparatus via a first target uplink control channel, an indication for notifying a beam report to be transmitted in a second target uplink channel subsequent to the first target uplink control channel;
determining, based on a number of beams to be reported and a type of uplink resources of a first candidate uplink channel, whether the first candidate uplink channel is to be skip; and
in accordance with a determination that the first candidate uplink channel is to be skip, waiting for a second candidate uplink channel subsequent to the first candidate uplink channel, for a second target uplink channel on which the beam report is to be transmitted to the second apparatus.
